# EUROPEAN PATENT APPLICATION

(11) **EP 4 428 076 A2**
(43) Date of publication of application: **11.09.2024**
(21) Application number: 24155232.2
(22) Date of filing: 01.02.2024
(51) Int. Cl.: B65H 31/26, B65H 45/18, B65H 31/02, B65H 31/38

(54) **POST-PROCESSING DEVICE AND CORRESPONDING IMAGE FORMING APPARATUS**

(30) Priority: 09.03.2023 JP 2023036732; 27.03.2023 JP 2023050217; 13.09.2023 JP 2023148272; 25.09.2023 JP 2023160231; 26.09.2023 JP 2023163181
(71) Applicant: FUJIFILM Business Innovation Corp., Minato-ku Tokyo (JP)
(72) Inventor: MIZUNO, Yuki, Yokohama-shi, Kanagawa (JP); FUKAMACHI, Takayuki, Yokohama-shi, Kanagawa (JP); FUKUI, Eri, Yokohama-shi, Kanagawa (JP); KAWANO, Koji, Yokohama-shi, Kanagawa (JP)
(74) Representative: Kurig, Thomas

(57) **Abstract**

A post-processing device (10) includes: a loading section (20) that has a loading surface (22) directed obliquely upward and in which a recording medium (P) is loaded on the loading surface in a state where one end (P2) of the recording medium is directed downward; a supporting section (50) that supports the one end of the recording medium loaded on the loading surface; and a correcting section (170) that has a facing surface (172) facing toward the loading surface and that corrects deflection of the recording medium by coming into contact with the recording medium in a posture in which a lower end portion of the facing surface approaches closer to the loading surface than an upper end portion from a side of the recording medium, which is loaded on the loading surface, opposite to the loading surface and by thereafter coming into contact with the recording medium while moving such that the upper end portion approaches the loading surface in a state where the lower end portion is in contact with the recording medium.

## Description

### BACKGROUND OF THE INVENTION

### (i) Field of the Invention

The present invention relates to a post-processing device and an image forming apparatus.

### (ii) Description of Related Art

JP2015-030596A discloses a sheet post-processing device including: a binding section that binds one end of a bundle of sheets on which an image is formed; and a loading section on which the sheets bound by the binding section are loaded. In the sheet post-processing, the loading section includes a staple tray on which the image-formed sheet slides down a slope to a reference fence, a correction section that corrects bending of an end surface parallel to the transport direction of the sheet on the staple tray with an alignment component before being bound by the binding section, and an adjustment section that adjusts an angle of the alignment component with respect to the staple tray.

JP2004-277131A discloses a sheet processing device including: a compile tray that sequentially accumulates supplied sheets to form one bundle of sheets; a sheet aligning section that aligns the sheets supplied to the compile tray; and a pushing member that is disposed so as to be able to advance and retreat in a thickness direction of the sheets accumulated in the compile tray and that pushes the sheets, which have already been accumulated in the compile tray and are aligned in the sheet aligning section, in a case where a new sheet is supplied to the compile tray.

JP2004-284756A discloses a sheet processing device including: a compile tray that receives and stacks supplied sheets; a counting section that counts the number of sheets supplied to the compile tray; and an execution section that executes a predetermined operation on the sheets on the basis of the count obtained by the counting section. In a case where the sheet supplied to the compile tray is a sheet subjected to some kind of post-processing, the counting section converts one sheet into n (n >1) sheets and performs the counting.

### SUMMARY OF THE INVENTION

As the post-processing device, a post-processing device is conceivable, which includes a loading section that has a loading surface directed obliquely upward and in which a recording medium is loaded on the loading surface in a state where one end of the recording medium is directed downward, a supporting section that supports the one end of the recording medium loaded on the loading surface, and a correcting section that has a facing surface facing toward the loading surface and that corrects deflection of the recording medium by the facing surface coming into contact with the recording medium.

In the post-processing device, in a case where the facing surface consistently comes into contact with the recording medium in a posture in which the facing surface is along the loading surface to correct deflection of the recording medium, a deflection part of the recording medium may extend downward. In such a case, a new deflection may occur in the vicinity of the one end of the recording medium.

In the present disclosure, as compared with a case where the facing surface consistently comes into contact with the recording medium in the posture in which the facing surface is along the loading surface to correct the deflection of the recording medium, an object of the present invention is to suppress the deflection part of the recording medium from extending downward in a case where the deflection of the recording medium is corrected.

According to a first aspect of the present disclosure, there is provided a post-processing device including: a loading section that has a loading surface directed obliquely upward and in which a recording medium is loaded on the loading surface in a state where one end of the recording medium is directed downward; a supporting section that supports the one end of the recording medium loaded on the loading surface; and a correcting section that has a facing surface facing toward the loading surface and that corrects deflection of the recording medium by coming into contact with the recording medium in a posture in which a lower end portion of the facing surface approaches closer to the loading surface than an upper end portion from a side of the recording medium, which is loaded on the loading surface, opposite to the loading surface and by thereafter coming into contact with the recording medium while moving such that the upper end portion approaches the loading surface in a state where the lower end portion is in contact with the recording medium.

According to a second aspect of the present disclosure, there is provided a post-processing device including: a loading section that has a loading surface directed obliquely upward and in which a recording medium is loaded on the loading surface in a state where one end of the recording medium is directed downward; a supporting section that supports the one end of the recording medium loaded on the loading surface; and a correcting section that corrects deflection of the recording medium by coming into contact with a first part of the recording medium from a side of the recording medium, which is loaded on the loading surface, opposite to the loading surface and by thereafter coming into contact with a second part above the first part of the recording medium in a state of being in contact with the first part.

According to a third aspect of the present disclosure, there is provided a post-processing device including: a loading section that has a loading surface directed obliquely upward and in which a recording medium is loaded on the loading surface in a state where one end of the recording medium is directed downward; a supporting section that supports the one end of the recording medium loaded on the loading surface; and a correcting section that corrects deflection of the recording medium by coming into contact with a part of the recording medium from a side of the recording medium, which is loaded on the loading surface, opposite to the loading surface and by thereafter coming into contact with the recording medium such that an area of the contact with the recording medium increases upward from the part.

According to a fourth aspect of the present disclosure according to any one of the first to third aspects, the post-processing device further including a folding section that folds the recording medium by pushing an intermediate part in an up-down direction of the recording medium in a state where the correcting section is in contact with the recording medium loaded on the loading surface.

According to a fifth aspect of the present disclosure, there is provided the post-processing device according to the fourth aspect, in which the correcting section may come into contact with the recording medium, which is loaded on the loading surface, under the folding section.

According to a sixth aspect of the present disclosure, there is provided the post-processing device according to any one of the first to fifth aspects, in which the correcting section may be able to selectively execute a first operation of correcting deflection of the recording medium by coming into contact with the recording medium in a posture in which the lower end portion of the facing surface approaches closer to the loading surface than the upper end portion from the side of the recording medium, which is loaded on the loading surface, opposite to the loading surface and by thereafter coming into contact with the recording medium while moving such that the upper end portion approaches the loading surface in a state where the lower end portion is in contact with the recording medium, and a second operation of correcting deflection of the recording medium by coming into contact with the recording medium while being displaced upward in a posture, in which the facing surface is along the loading surface, from the side of the recording medium, which is loaded on the loading surface, opposite to the loading surface.

According to a seventh aspect of the present disclosure, there is provided the post-processing device according to the sixth aspect, in which the correcting section may execute the first operation in a case where a first type recording medium is loaded on the loading surface, and may execute the second operation in a case where a second type recording medium different from the first type recording medium is loaded on the loading surface.

According to an eighth aspect of the present disclosure, there is provided the post-processing device according to the sixth or seventh aspect, in which the correcting section may execute the first operation in a case where a recording medium, on which a first fixing device fixes an image, is loaded on the loading surface, and may execute the second operation in a case where a recording medium, on which a second fixing device different from the first fixing device fixes an image, is loaded on the loading surface.

According to a ninth aspect of the present disclosure, there is provided an image forming apparatus including: an image forming section that forms an image on a recording medium; and the post-processing device according to any one of the first to eighth aspects that executes post-processing on the recording medium on which the image forming section forms the image.

In the configuration according to the first aspect, as compared with a case where the facing surface consistently comes into contact with the recording medium in the posture in which the facing surface is along the loading surface to correct the deflection of the recording medium, the deflection part of the recording medium is suppressed from extending downward in a case where the deflection of the recording medium is corrected.

In the configuration according to the second aspect, as compared with a case where the correcting section consistently comes into contact with the first part and the second part of the recording medium at the same time to correct the deflection of the recording medium, the deflection part of the recording medium is suppressed from extending downward in a case where the deflection of the recording medium is corrected.

In the configuration according to the third aspect, as compared with a case where the correcting section consistently corrects the deflection of the recording medium while keeping the area of the contact with the recording medium constant, the deflection part of the recording medium is suppressed from extending downward in a case where the deflection of the recording medium is corrected.

In the configuration according to the fourth aspect, as compared with a case where the folding section pushes an intermediate part in the up-down direction of the recording medium to fold the recording medium in a state where the correcting section is not in contact with the recording medium, the folding position is suppressed from being in disorder for each recording medium.

In the configuration according to the fifth aspect, as compared with a case where the correcting section comes into contact with the recording medium loaded on the loading surface above the folding section, the folding position is suppressed from being in disorder for each recording medium.

In the configuration according to the sixth aspect, as compared with a case where the correcting section is able to execute only the first operation, the deflection part of the recording medium is suppressed from extending downward in a case where the deflection of the recording medium is corrected.

In the configuration according to the seventh aspect, as compared with the case where the first operation and the second operation are selected regardless of the type of the recording medium, the deflection part of the recording medium is suppressed from extending downward in a case where the deflection of the recording medium is corrected.

In the configuration according to the eighth aspect, as compared with the case where the first operation and the second operation are selected regardless of the type of the fixing device which fixes the image to the recording medium, the deflection part of the recording medium is suppressed from extending downward in a case where the deflection of the recording medium is corrected.

In the configuration according to the ninth aspect, as compared with the case where the facing surface consistently comes into contact with the recording medium in a posture in which the facing surface is along the loading surface to correct the deflection of the recording medium, the deflection part of the recording medium is suppressed from extending downward in a case where the deflection of the recording medium on which the image is formed is corrected.

### BRIEF DESCRIPTION OF THE DRAWINGS

Exemplary embodiment(s) of the present invention will be described in detail based on the following figures, wherein:
Fig. 1 is a schematic diagram showing an image forming apparatus according to a present exemplary embodiment;
Fig. 2 is an enlarged schematic diagram showing a part of a post-processing device according to the present exemplary embodiment;
Fig. 3 is a schematic diagram showing a state where a first correcting section comes into contact with a recording medium in a posture in which a lower end portion of a facing surface of the first correcting section is closer to a loading surface than an upper end portion thereof in a configuration shown in Fig. 2;
Fig. 4 is a schematic diagram showing a state where the first correcting section is positioned at a correction position in the configuration shown in Fig. 2;
Fig. 5 is a schematic diagram showing a state where a second correcting section comes into contact with the recording medium in a posture in which the lower end portion of the facing surface of the second correcting section is closer to the loading surface than the upper end portion thereof in a configuration shown in Fig. 4;
Fig. 6 is a schematic diagram showing a state where the second correcting section is positioned at a correction position in the configuration shown in Fig. 4;
Fig. 7 is an enlarged side view showing a part of the post-processing device according to the present exemplary embodiment;
Fig. 8 is a schematic diagram showing a state before executing of folding processing in a post-processing section according to the present exemplary embodiment;
Fig. 9 is a schematic diagram showing a state where the folding processing is executed in the post-processing section according to the present exemplary embodiment; and
Fig. 10 is a flow chart showing an execution procedure of executing post-processing according to the present exemplary embodiment.

### DETAILED DESCRIPTION OF THE INVENTION

An example of an exemplary embodiment according to the present invention will be described below with reference to the drawings.

### <Image Forming Apparatus 100>

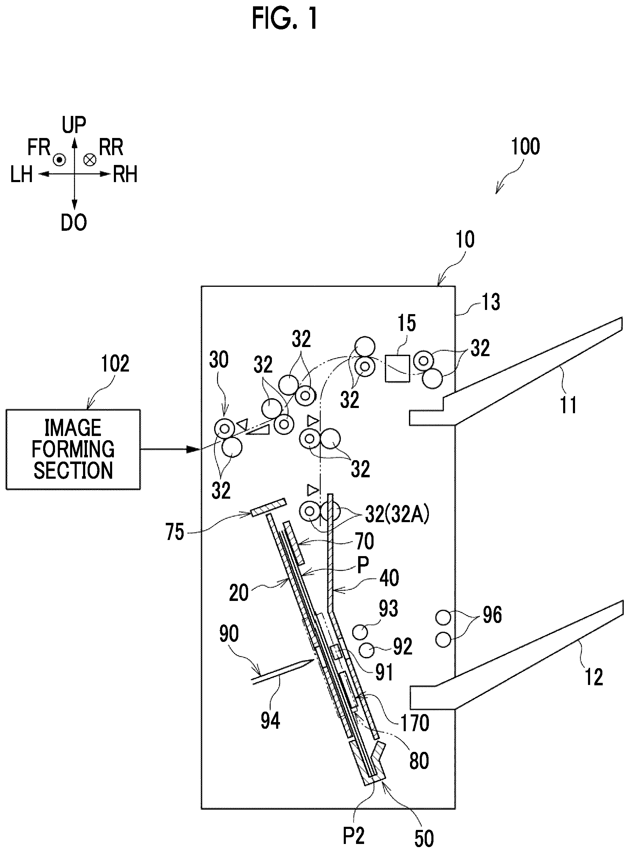

First, a configuration of an image forming apparatus 100 according to the present exemplary embodiment will be described. Fig. 1 is a schematic diagram showing the configuration of the image forming apparatus 100 according to the present exemplary embodiment.

An arrow UP shown in the drawing indicates an upper side of the apparatus, and an arrow DO indicates a lower side of the apparatus. Further, an arrow LH shown in the drawing indicates a left side of the apparatus and an arrow RH indicates a right side of the apparatus. Furthermore, an arrow FR shown in the drawing indicates a front side of the apparatus and an arrow RR indicates a rear side of the apparatus. Since these directions are directions determined for the sake of convenience of description, the configuration of the apparatus is not limited by these directions. It should be noted that regarding each of the directions relating to the apparatus, the term "apparatus" may be omitted. That is, for example, "the upper side of the apparatus" may simply be described as "the upper side."

Also, in the following description, the term "up-down direction" may be used to mean "both of an upward direction and a downward direction" or "any one of the upward direction or the downward direction". A term "right-left direction" may be used to mean "both of a rightward direction and a leftward direction" or "any one of the rightward direction or the leftward direction". It should be noted that the "right-left direction" may also be referred to as a lateral direction, a transverse direction, and a horizontal direction. A term "front-rear direction" may be used to mean "both of a forward direction and a rearward direction" or "any one of the forward direction or the rearward direction". It should be noted that the "front-rear direction" may also be referred to as a lateral direction, a transverse direction, and a horizontal direction. Further, the up-down direction, the right-left direction, and the front-rear direction are directions that intersect each other (specifically, directions orthogonal to each other).

Further, a symbol in which "×" is in "o" in the drawings means an arrow from the front to the back of the sheet surface. Furthermore, a symbol in which "•" is in "o" in the drawings means an arrow from the back to the front of the sheet surface. Moreover, dimensional ratios of parts shown in the respective drawings in the up-down direction, the right-left direction, and the front-rear direction may differ from actual dimensional ratios.

The image forming apparatus 100 shown in Fig. 1 is an apparatus that forms an image on a recording medium P, and includes an image forming section 102 and a post-processing device 10 as shown in Fig. 1. Hereinafter, each section of the image forming apparatus 100 (specifically, the image forming section 102 and the post-processing device 10) will be described.

### <Image Forming Section 102>

The image forming section 102 shown in Fig. 1 is a constituent section that forms an image on the recording medium P. For example, an electrophotographic image forming section that forms an image on the recording medium P using toner is used as the image forming section 102.

In the electrophotographic image forming section, for example, each step of charging, exposure, development, transfer, and fixing is performed to form an image on the recording medium P. Specifically, as the electrophotographic image forming section, for example, each step of charging, exposure, development, and transfer can be performed to form an image on a transfer body, the image can be transferred from the transfer body to the recording medium P, and then the image can be fixed on the recording medium P to form an image on the recording medium P.

An example of the image forming section is not limited to the electrophotographic image forming section described above and may be, for example, an inkjet image forming section, and various image forming sections can be used. In the inkjet image forming section, for example, an ink droplet is ejected from a discharge section to the recording medium P to form an image on the recording medium P.

### <Post-Processing Device 10>

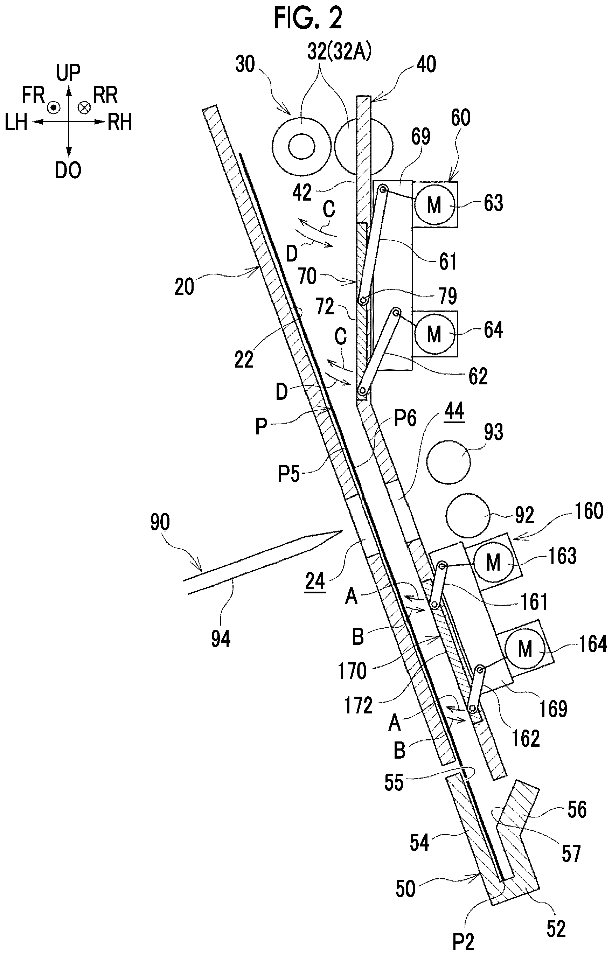

The post-processing device 10 shown in Fig. 1 is a device that executes post-processing on the recording medium P on which the image forming section 102 forms an image. Specifically, as shown in Fig. 1, the post-processing device 10 includes a post-processing device body 13, a first ejection section 11, a second ejection section 12, a post-processing section 15, and a loading section 20, a transporting mechanism 30, a guiding section 40, a supporting section 50, a first correcting section 170, a first moving mechanism 160 (refer to Fig. 2), a second correcting section 70, a second moving mechanism 60 (refer to Fig. 2), an abutting section 75, an aligning section 80, and a post-processing section 90. Hereinafter, description will be given of the sections of the post-processing device 10 (specifically, the post-processing device body 13, the first ejection section 11, the second ejection section 12, the post-processing section 15, the loading section 20, the transporting mechanism 30, the guiding section 40, the supporting section 50, the first correcting section 170, the first moving mechanism 160, the second correcting section 70, the second moving mechanism 60, the abutting section 75, the aligning section 80, and the post-processing section 90).

### <Post-Processing Device Body 13, First Ejection Section 11, Second Ejection Section 12, and Post-Processing Section 15>

The post-processing device body 13 shown in Fig. 1 is a part in which the constituent sections of the post-processing device 10 are provided. Specifically, the post-processing device body 13 is configured to include a housing formed in a box-like shape (for example, a substantially rectangular parallelepiped shape).

In the present exemplary embodiment, as shown in Fig. 1, for example, the post-processing section 15, the loading section 20, the transporting mechanism 30, the guiding section 40, the supporting section 50, the first correcting section 170, and the first moving mechanism 160 (refer to Fig. 2), the second correcting section 70, the second moving mechanism 60 (refer to Fig. 2), the abutting section 75, the aligning section 80, and the post-processing section 90 are provided inside the post-processing device body 13. The first ejection section 11 and the second ejection section 12 are provided on the right side surface of the post-processing device body 13.

The first ejection section 11 is disposed at an upper portion on a right side surface of the post-processing device body 13. The recording medium P, of which the post-processing has been executed by the post-processing section 15, is ejected to the first ejection section 11.

Here, the post-processing is processing executed on the recording medium P on which the image is formed. As the post-processing executed by the post-processing section 15, there is binding processing of binding a plurality of recording media P with a stapler. It should be noted that the post-processing is not limited to the binding processing. The post-processing may be, for example, cutting processing of cutting the recording medium P, drilling processing of making a hole in the recording medium P, or the like, and may be processing executed on the recording medium P on which an image is formed.

The second ejection section 12 is a lower portion on the right side surface of the post-processing device body 13 and is disposed under the first ejection section 11. The recording medium P that has been post-processed by the post-processing section 90 to be described later is ejected to the second ejection section 12.

### <Loading Section 20>

The loading section 20 shown in Figs. 1 and 2 is a constituent section on which the recording medium P is loaded. In the present exemplary embodiment, as shown in Fig. 2, the loading section 20 is configured to have a plate body which extends obliquely upward (toward the obliquely upper left side, in the present exemplary embodiment) in a normal cross-sectional view. The loading section 20 has a loading surface 22 that is directed obliquely upward (toward the obliquely upper right side, in the present exemplary embodiment). In the loading section 20, the recording medium P is loaded on the loading surface 22 in a state where one end (hereinafter, referred to as a lower end P2) of the recording medium P faces downward. The loading section 20 is formed with a passage hole 24 through which the push-in portion 94 to be described later passes.

### <Transporting Mechanism 30 and Guiding Section 40>

The transporting mechanism 30 shown in Fig. 1 is a mechanism that transports the recording medium P to the loading section 20. In the present exemplary embodiment, the transporting mechanism 30 selectively transports the recording medium P to one of the first ejection section 11 and the loading section 20.

Specifically, as shown in Fig. 1, the transporting mechanism 30 is configured to include a plurality of transporting rollers 32. Among the plurality of transporting rollers 32, the transporting rollers 32A are provided at a position facing toward the upper portion of the loading surface 22, and transport the recording medium P downward toward the loading surface 22. The transporting rollers 32A are an example of the transporting section.

The guiding section 40 shown in Figs. 1 and 2 is a constituent section that guides the recording medium P transported by the transporting rollers 32A. In the present exemplary embodiment, as shown in Fig. 2, the guiding section 40 is configured by using a plate body which extends obliquely upward (toward the obliquely upper left side, in the present exemplary embodiment) in a normal cross-sectional view. The guiding section 40 has a guiding surface 42 that is directed obliquely downward (toward the obliquely lower left side, in the present exemplary embodiment) and faces toward the loading surface 22. In the guiding section 40, the guiding surface 42 guides the recording medium P to the loading surface 22. The guiding section 40 is formed with a passage hole 44 through which the push-in portion 94 to be described later passes.

### <Supporting Section 50>

The supporting section 50 shown in Figs. 1 and 2 is a constituent section that supports the lower end P2 of the recording medium P loaded on the loading surface 22. As shown in Figs. 1 and 2, the supporting section 50 is disposed on the obliquely lower right side with respect to the loading section 20. As shown in Fig. 2, the supporting section 50 has an abutting part 52, a loading part 54, and a guiding part 56.

The abutting part 52 abuts against the lower end P2 of the recording medium P loaded on the loading surface 22 and supports the lower end P2. In a plurality of recording media P loaded on the loading surface 22, the lower end P2 is aligned by abutting the lower end P2 against the abutting part 52.

The loading part 54 is loaded with a lower portion of the recording medium P to which the lower end P2 is abutted against the abutting part 52. The loading part 54 has a loading surface 55 that is directed obliquely upward (toward the obliquely upper right side, in the present exemplary embodiment). The loading surface 55 is disposed on the obliquely lower right side with respect to the loading surface 22 of the loading section 20 and is disposed along the loading surface 22.

The guiding part 56 guides the lower end P2 of the recording medium P guided by the guiding section 40 to the abutting part 52 side. The guiding part 56 has a guiding surface 57 facing toward the loading surface 55. In the guiding part 56, the guiding surface 57 guides the recording medium P to the abutting part 52.

### <First Correcting Section 170 and First Moving Mechanism 160>

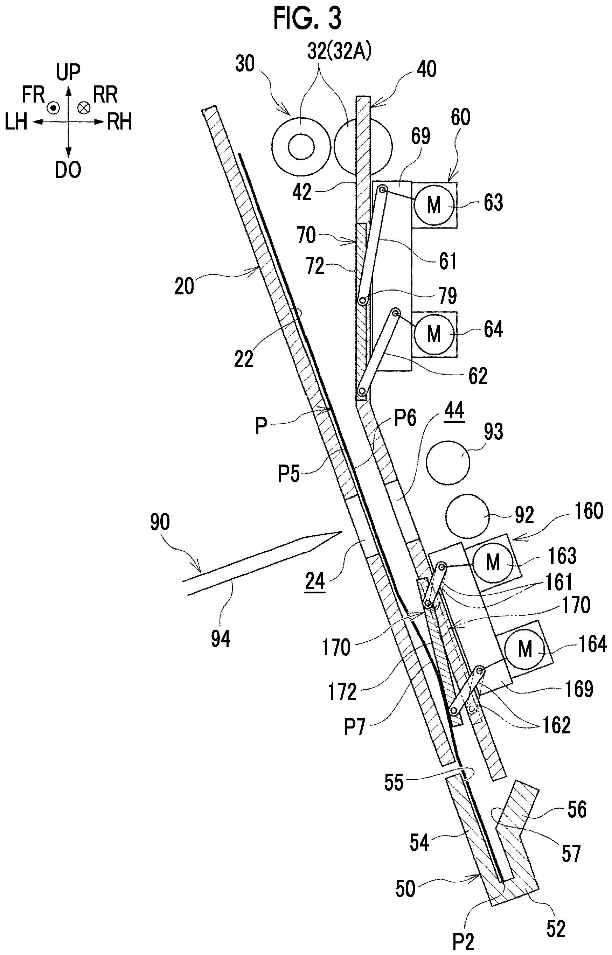

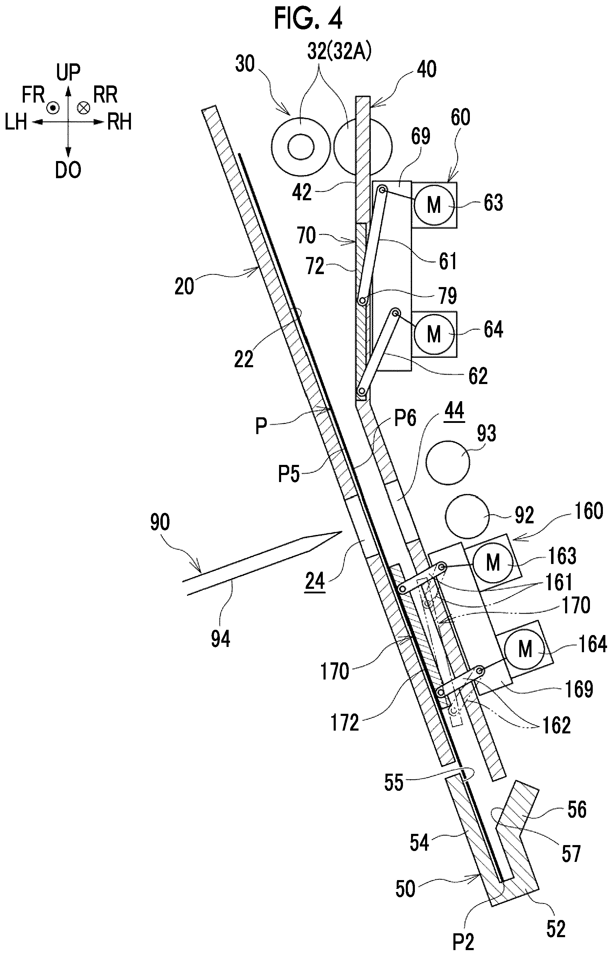

The first correcting section 170 shown in Figs. 1 and 2 is a constituent section that comes into contact with the recording medium P loaded on the loading surface 22 to correct the deflection P7 of the recording medium P (refer to Figs. 3 and 4). It should be noted that the first correcting section 170 is an example of the correcting section. The first correcting section 170 is disposed under the post-processing section 90 (a pair of folding rollers 92 and 93 and a push-in portion 94 to be described later) and above the supporting section 50.

Specifically, as shown in Fig. 2, the first correcting section 170 is configured by using a plate body which extends toward the obliquely upper left side and of which a thickness direction is toward the obliquely upper right side. The first correcting section 170 has a facing surface 172 which faces toward the loading surface 22 of the loading section 20. The facing surface 172 constitutes a flat surface which comes into contact with the recording medium P.

The first moving mechanism 160 is a mechanism that moves the first correcting section 170 between a correction position (a position indicated by the solid line in Fig. 4) and a retraction position (a position shown in Fig. 2). Specifically, as shown in Figs. 2, 3, and 4, the first moving mechanism 160 has a first link 161, a second link 162, a supporting section 169, a first driving portion 163, and a second driving portion 164.

The supporting section 169 is a constituent section that supports the first link 161 and the second link 162, the first driving portion 163, and the second driving portion 164. The supporting section 169 is attached to the guiding section 40 on a side (the right side in the present exemplary embodiment) of the guiding section 40 opposite to the loading section 20.

The first link 161 is disposed above the second link 162, and one end portion thereof is rotatably supported by an upper portion of the supporting section 169. The other end portion of the first link 161 is rotatably attached to an upper portion of the first correcting section 170.

On the other hand, one end portion of the second link 162 is rotatably supported on the lower portion of the supporting section 169 (that is, under the support position of the first link 161 in the supporting section 169), and the other end portion is rotatably attached to the lower portion of the first correcting section 170 (that is, under the attachment position of the first link 161 onto the first correcting section 170).

Each of the first driving portion 163 and the second driving portion 164 is configured such that each of the first link 161 and the second link 162 can be driven to be rotatable in both the A direction and the B direction between a first position (a position shown in Fig. 2) and a second position (a position indicated by the solid line in Fig. 4).

Each of the first driving portion 163 and the second driving portion 164 rotates each of the first link 161 and the second link 162 from the first position (the position shown in Fig. 2) in the A direction. Thereby, the first correcting section 170 moves from the retraction position (the position shown in Fig. 2) to the correction position (the position indicated by the solid line in Fig. 4). On the other hand, each of the first driving portion 163 and the second driving portion 164 causes each of the first link 161 and the second link 162 to rotate in the B direction from the second position (the position indicated by the solid line in Fig. 4). Thereby, the first correcting section 170 moves from the correction position (the position indicated by the solid line in Fig. 4) to the retraction position (the position shown in Fig. 2).

Here, each of the first driving portion 163 and the second driving portion 164 is able to control a rotation angle of each of the first link 161 and the second link 162, and is able to independently drive each of the first link 161 and the second link 162. Therefore, the first correcting section 170 is capable of performing the following first and second operations.

It should be noted that, as each of the first driving portion 163 and the second driving portion 164, for example, a servo motor or a stepping motor, of which the rotation angle can be controlled by a pulse signal, is used.

### <First Operation of First Correcting Section 170>

In the first operation, for example, the second driving portion 164 rotates the second link 162 from the first position (the position shown in Fig. 2) in the A direction by a first rotation angle, and the first driving portion 163 does not drive the first link 161 or rotates the first link 161 in the A direction from the first position (the position shown in Fig. 2) by a second rotation angle smaller than the first rotation angle (refer to Fig. 3). It should be noted that the first rotation angle may be a rotation angle from the first position (the position shown in Fig. 2) to the second position, or may be a rotation angle smaller than the rotation angle.

Thereby, the first correcting section 170 moves from the retraction position (the position shown in Fig. 2) toward the loading surface 22. In the process of this movement, the first correcting section 170 comes into contact with the recording medium P in a posture in which the lower end portion of the facing surface 172 approaches closer to the loading surface 22 than the upper end portion thereof from the side (right side) of the recording medium P, which is loaded on the loading surface 22, opposite to the loading surface 22.

Further, in the first operation, for example, each of the first driving portion 163 and the second driving portion 164 rotates each of the first link 161 and the second link 162 in the A direction up to the second position (the position indicated by the solid line in Fig. 4). It should be noted that in a case where the second link 162 is positioned at the second position due to the rotation of the first rotation angle described above, only the first link 161 rotates up to the second position.

Thereby, the first correcting section 170 moves to the correction position (the position indicated by the solid line in Fig. 4). In the process of this movement, in a state where the lower end portion of the facing surface 172 is in contact with the recording medium P, the first correcting section 170 corrects the deflection P7 of the recording medium P by the upper end portion of the facing surface 172 coming into contact with the recording medium P while moving so as to approach the loading surface 22. In such a case, the first correcting section 170 corrects the deflection P7 of the recording medium P by changing the posture such that the facing surface 172 is along the loading surface 22 and moving to the correction position (the position indicated by the solid line in Fig. 4) while being displaced upward to push the recording medium P against the loading surface 22.

Further, the first correcting section 170 keeps a state where the deflection P7 of the recording medium P is corrected (restricts the reformation of the deflection P7 of the recording medium P) by sandwiching the recording medium P between the first correcting section 170 and the loading surface 22 at the correction position (the position indicated by the solid line in Fig. 4).

As described above, in the first operation, the first correcting section 170 comes into contact with a first part (specifically, an optional part other than the lower end portion) of the recording medium P from a side of the recording medium P, which is loaded on the loading surface 22, opposite to the loading surface 22 (refer to Fig. 3) and thereafter comes into contact with a second part above the first part of the recording medium P in a state of being in contact with the first part, thereby correcting the deflection P7 of the recording medium P (refer to Fig. 4).

In other words, in the first operation, the first correcting section 170 comes into contact with a part of the recording medium P from a side of the recording medium P, which is loaded on the loading surface 22, opposite to the loading surface 22 (refer to Fig. 3) and thereafter comes into contact with the recording medium P such that an area of the contact with the recording medium P increases upward from the part, thereby correcting deflection P7 of the recording medium P (refer to Fig. 4).

### <Second Operation of First Correcting Section 170>

In the second operation, for example, each of the first driving portion 163 and the second driving portion 164 rotates each of the first link 161 and the second link 162 in the A direction from the first position (the position shown in Fig. 2) to the second position (the position indicated by the solid line in Fig. 4). That is, each of the first driving portion 163 and the second driving portion 164 rotates each of the first link 161 and the second link 162 in the A direction in synchronization with each other.

Thereby, the first correcting section 170 moves from the retraction position (the position shown in Fig. 2) to the correction position (the position indicated by the solid line in Fig. 4). In the process of this movement, the first correcting section 170 comes into contact with the recording medium P while being displaced upward in a posture, in which the facing surface 172 is along the loading surface 22, from a side of the recording medium P, which is loaded on the loading surface 22, opposite to the loading surface 22, thereby correcting the deflection P7 of the recording medium P.

Also in the second operation, the first correcting section 170 keeps a state where the deflection P7 of the recording medium P is corrected (restricts the reformation of the deflection P7 of the recording medium P) by sandwiching the recording medium P between the first correcting section 170 and the loading surface 22 at the correction position (the position indicated by the solid line in Fig. 4).

It should be noted that the retraction position (the position shown in Fig. 2) is a position at which the first correcting section 170 retracts from the correction position (the position indicated by the solid line in Fig. 4). In addition, at the retraction position, the first correcting section 170 is disposed along the guiding surface 42 of the guiding section 40. Therefore, the first correcting section 170 guides the recording medium P, which is transported by the transporting rollers 32A, to the loading surface 22 and the supporting section 50 by using the facing surface 172 at the retraction position.

### <Selection between First Operation and Second Operation of First Correcting Section 170>

The first correcting section 170 is able to selectively execute the above-mentioned first operation and the above-mentioned second operation. Specifically, for example, the first correcting section 170 executes the above-mentioned first operation in a case where a first type recording medium P is loaded on the loading surface 22, and executes the above-mentioned second operation in a case where a second type recording medium P different from the first type recording medium P is loaded on the loading surface 22.

The first type is, for example, thin sheet (for example, sheet having a basis weight of less than 60 g/m²) or a recording medium P having low rigidity. The second type is, for example, a plain sheet or a thick sheet (for example, a basis weight of 60 g/m² or more) or a recording medium P having a higher rigidity than the first type.

Further, the first correcting section 170 may execute the above-mentioned first operation in a case where a recording medium P, on which a first fixing device fixes an image, is loaded on the loading surface 22, and may execute the above-mentioned second operation in a case where a recording medium P, on which a second fixing device different from the first fixing device fixes an image, is loaded on the loading surface 22. The first fixing device is a device that bends the recording medium P such that the recording medium P on the side opposite to the loading surface 22 is convex in a state where the recording medium P is loaded on the loading surface 22, by performing a fixing operation on the recording medium P.

The second fixing device is a device that bends the recording medium P such that the recording medium P on the loading surface 22 side is convex in a state where the recording medium P is loaded on the loading surface 22, by performing a fixing operation on the recording medium P.

### <Second Correcting Section 70 and Second Moving Mechanism 60>

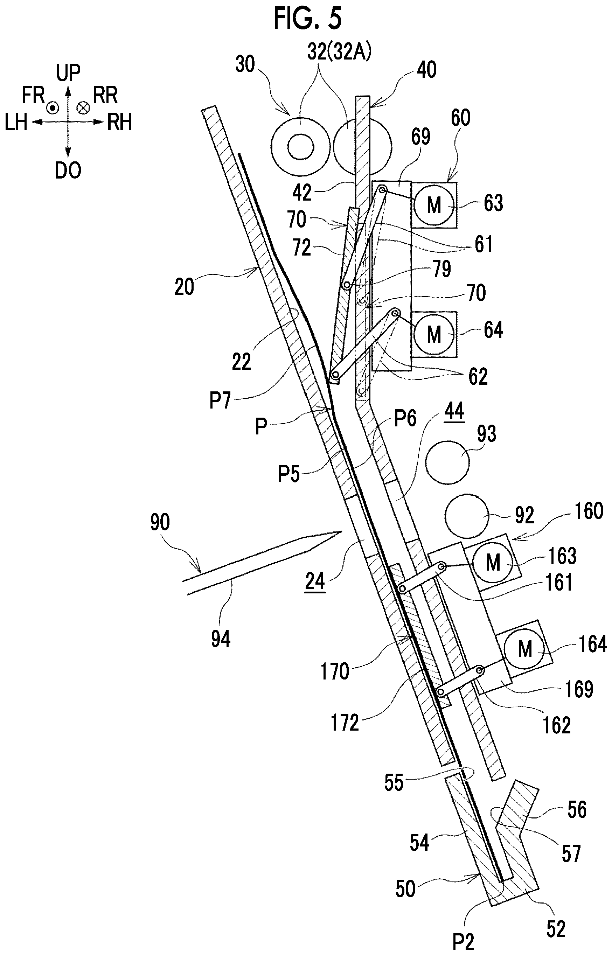

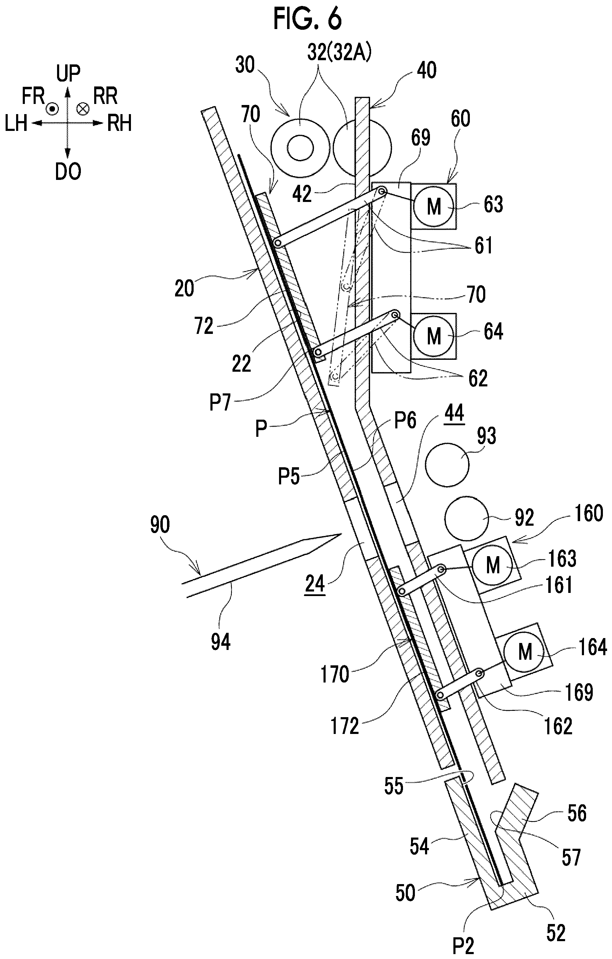

The second correcting section 70 shown in Figs. 1 and 2 is a constituent section that comes into contact with the recording medium P loaded on the loading surface 22 to correct the deflection P7 of the recording medium P (refer to Figs. 5 and 6). It should be noted that the second correcting section 70 is an example of the correcting section. The second correcting section 70 is disposed above the post-processing section 90 (a pair of folding rollers 92 and 93 and a push-in portion 94 to be described later) and under the transporting rollers 32A.

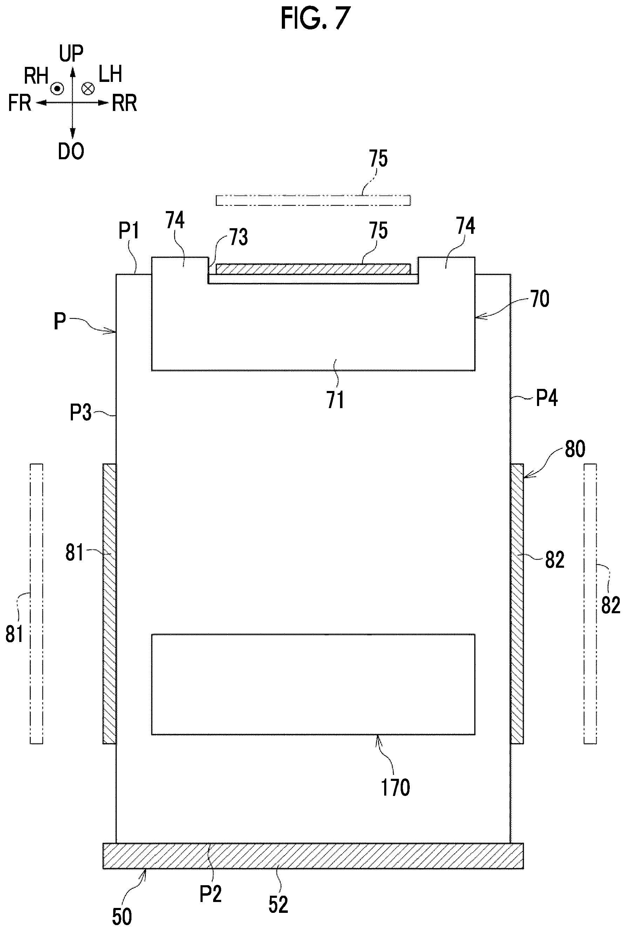

Specifically, as shown in Fig. 2, the second correcting section 70 is configured by using a plate body which extends in the up-down direction and of which the thickness direction is set as the right-left direction. The second correcting section 70 has a facing surface 72 which faces toward the loading surface 22 of the loading section 20. The facing surface 72 constitutes a flat surface which comes into contact with the recording medium P. As shown in Fig. 7, a notch 73 into which the abutting section 75 is able to enter is formed at the upper end of the second correcting section 70. Specifically, the second correcting section 70 has a body portion 71 that comes into contact with the recording medium P loaded on the loading surface 22 downward from the upper end P1 and a pair of overhanging portions 74 that overhang upward from each of the front side part and the rear side part of the body portion 71.

The second moving mechanism 60 is a mechanism that moves the second correcting section 70 between a correction position (a position indicated by the solid line in Fig. 6) and a retraction position (a position shown in Fig. 2). Specifically, as shown in Figs. 2, 5, and 6, the second moving mechanism 60 has a first link 61, a second link 62, a supporting section 69, a first driving portion 63, and a second driving portion 64.

The supporting section 69 is a constituent section that supports the first link 61, the second link 62, the first driving portion 63, and the second driving portion 64. The supporting section 69 is attached to the guiding section 40 on a side (the right side in the present exemplary embodiment) of the guiding section 40 opposite to the loading section 20.

The first link 61 is disposed above the second link 62, and one end portion thereof is rotatably supported by an upper portion of the supporting section 69. The other end portion of the first link 61 is rotatably attached to the second correcting section 70 above the attachment position of the second link 62 onto the second correcting section 70. Specifically, the other end portion of the first link 61 is rotatably attached to the second correcting section 70 so as to be movable in the up-down direction at the retraction position (the position shown in Fig. 2). For the other end portion, for example, a shaft portion 79 protruding in the front-rear direction is formed, and the shaft portion 79 is attached to a long hole (not shown in the drawing) formed in the second correcting section 70 along the up-down direction. Thereby, the other end portion is movable in the long hole relative to the second correcting section 70 along the up-down direction.

On the other hand, one end portion of the second link 62 is rotatably supported on the lower portion of the supporting section 69 (that is, under the support position of the first link 61 in the supporting section 69), and the other end portion is rotatably attached to a lower portion of the second correcting section 70 (that is, under the attachment position of the first link 61 onto the second correcting section 70).

Each of the first driving portion 63 and the second driving portion 64 is configured such that each of the first link 61 and the second link 62 can be driven to be rotatable in both the C direction and the D direction between a first position (a position shown in Fig. 2) and a second position (a position indicated by the solid line in Fig. 6).

Each of the first driving portion 63 and the second driving portion 64 rotates each of the first link 61 and the second link 62 from the first position (the position shown in Fig. 2) in the C direction. Thereby, the second correcting section 70 moves from the retraction position (the position shown in Fig. 2) to the correction position (the position indicated by the solid line in Fig. 6). On the other hand, each of the first driving portion 63 and the second driving portion 64 causes each of the first link 61 and the second link 62 to rotate in the D direction from the second position (the position indicated by the solid line in Fig. 6). Thereby, the second correcting section 70 moves from the correction position (the position indicated by the solid line in Fig. 6) to the retraction position (the position shown in Fig. 2).

Here, each of the first driving portion 63 and the second driving portion 64 is able to control a rotation angle of each of the first link 61 and the second link 62, and is able to independently drive each of the first link 61 and the second link 62. Therefore, the second correcting section 70 is capable of performing the following first and second operations.

It should be noted that, as each of the first driving portion 63 and the second driving portion 64, for example, a servo motor or a stepping motor, of which the rotation angle can be controlled by a pulse signal, is used.

### <First Operation of Second Correcting Section 70>

In the first operation, for example, the second driving portion 64 rotates the second link 62 from the first position (the position shown in Fig. 2) in the C direction by a first rotation angle, and the first driving portion 63 does not drive the first link 61 or rotates the first link 61 in the C direction from the first position (the position shown in Fig. 2) by a second rotation angle smaller than the first rotation angle (refer to Fig. 5). It should be noted that the first rotation angle may be a rotation angle from the first position (the position shown in Fig. 2) to the second position, or may be a rotation angle smaller than the rotation angle.

Thereby, the second correcting section 70 moves from the retraction position (the position shown in Fig. 2) toward the loading surface 22. In the process of this movement, the second correcting section 70 comes into contact with the recording medium P in a posture in which the lower end portion of the facing surface 72 approaches closer to the loading surface 22 than the upper end portion thereof from the side (right side) of the recording medium P, which is loaded on the loading surface 22, opposite to the loading surface 22.

Further, in the first operation, for example, each of the first driving portion 63 and the second driving portion 64 rotates each of the first link 61 and the second link 62 in the C direction up to the second position (the position indicated by the solid line in Fig. 6). It should be noted that in a case where the second link 62 is positioned at the second position due to the rotation of the first rotation angle described above, only the first link 61 rotates up to the second position.

Thereby, the second correcting section 70 moves to the correction position (the position indicated by the solid line in Fig. 6). In the process of this movement, in a state where the lower end portion of the facing surface 72 is in contact with the recording medium P, the second correcting section 70 corrects the deflection P7 of the recording medium P by the upper end portion of the facing surface 72 coming into contact with the recording medium P while moving to the correction position (the position indicated by the solid line in 6) so as to approach the loading surface 22. In such a case, the second correcting section 70 corrects the deflection P7 of the recording medium P by changing the posture such that the facing surface 72 is along the loading surface 22 and moving to the correction position (the position indicated by the solid line in Fig. 6) while being displaced upward to push the recording medium P against the loading surface 22.

Further, the second correcting section 70 keeps a state where the deflection P7 of the recording medium P is corrected (restricts the reformation of the deflection P7 of the recording medium P) by sandwiching the recording medium P between the second correcting section 70 and the loading surface 22 at the correction position (the position indicated by the solid line in Fig. 6).

As described above, in the first operation, the second correcting section 70 comes into contact with a first part of the recording medium P from a side of the recording medium P, which is loaded on the loading surface 22, opposite to the loading surface 22 (refer to Fig. 5) and thereafter comes into contact with a second part above the first part of the recording medium P in a state of being in contact with the first part, thereby correcting the deflection P7 of the recording medium P (refer to Fig. 6).

In other words, in the first operation, the second correcting section 70 comes into contact with a part of the recording medium P from a side of the recording medium P, which is loaded on the loading surface 22, opposite to the loading surface 22 (refer to Fig. 5) and thereafter comes into contact with the recording medium P such that an area of the contact with the recording medium P increases upward from the part, thereby correcting deflection P7 of the recording medium P (refer to Fig. 6).

### <Second Operation of Second Correcting Section 70>

In the second operation, for example, each of the first driving portion 63 and the second driving portion 64 rotates each of the first link 61 and the second link 62 in the C direction from the first position (the position shown in Fig. 2) to the second position (the position indicated by the solid line in Fig. 6). That is, each of the first driving portion 63 and the second driving portion 64 rotates each of the first link 61 and the second link 62 in the C direction in synchronization with each other.

Thereby, the second correcting section 70 moves from the retraction position (the position shown in Fig. 2) to the correction position (the position indicated by the solid line in Fig. 6). In the process of this movement, the second correcting section 70 comes into contact with the recording medium P while being displaced upward in a posture, in which the facing surface 72 is along the loading surface 22, from a side of the recording medium P, which is loaded on the loading surface 22, opposite to the loading surface 22, thereby correcting the deflection P7 of the recording medium P.

Also in the second operation, the second correcting section 70 keeps a state where the deflection P7 of the recording medium P is corrected (restricts the reformation of the deflection P7 of the recording medium P) by sandwiching the recording medium P between the second correcting section 70 and the loading surface 22 at the correction position (the position indicated by the solid line in Fig. 6).

It should be noted that the retraction position (the position shown in Fig. 2) is a position at which the second correcting section 70 retracts from the correction position (the position indicated by the solid line in Fig. 6). In addition, at the retraction position, the second correcting section 70 is disposed along the guiding surface 42 of the guiding section 40. Therefore, the second correcting section 70 guides the recording medium P, which is transported by the transporting rollers 32A, to the loading surface 22 and the supporting section 50 by using the facing surface 72 at the retraction position.

### <Selection between First Operation and Second Operation of Second Correcting Section 70>

The second correcting section 70 is able to selectively execute the above-mentioned first operation and the above-mentioned second operation. Specifically, for example, the second correcting section 70 executes the above-mentioned first operation in a case where a first type recording medium P is loaded on the loading surface 22, and executes the above-mentioned second operation in a case where a second type recording medium P different from the first type recording medium P is loaded on the loading surface 22.

The first type is, for example, a thin sheet (for example, sheet having a basis weight of less than 60 g/m²). The second type is, for example, a plain sheet or a thick sheet (for example, sheet having a basis weight of 60 g/m² or more).

Further, the second correcting section 70 may execute the above-mentioned first operation in a case where a recording medium P, on which a first fixing device fixes an image, is loaded on the loading surface 22, and may execute the above-mentioned second operation in a case where a recording medium P, on which a second fixing device different from the first fixing device fixes an image, is loaded on the loading surface 22. The first fixing device is a device that bends the recording medium P such that the recording medium P on the side opposite to the loading surface 22 is convex in a state where the recording medium P is loaded on the loading surface 22, by performing a fixing operation on the recording medium P.

The second fixing device is a device that bends the recording medium P such that the recording medium P on the loading surface 22 side is convex in a state where the recording medium P is loaded on the loading surface 22, by performing a fixing operation on the recording medium P.

### <Abutting Section 75>

As shown in Fig. 7, the abutting section 75 pushes the upper end P1 of the recording medium P downward in a state where the first correcting section 170 and the second correcting section 70 are positioned at the correction positions (refer to Fig. 6), and abuts the lower end P2 against the supporting section 50. Thereby, the upper end P1 of the recording medium P (in other words, the position of the recording medium P in the up-down direction) is aligned.

In the present exemplary embodiment, the abutting section 75 moves from the retraction position (the position indicated by the two-dot chain line in Fig. 7) at which the abutting section 75 is not in contact with the recording medium P transported toward the loading surface 22, and pushes the upper end P1 of the recording medium P downward. The retraction position is a position on the outside (specifically, the upper side) of the notch 73 of the second correcting section 70. Further, the retraction position is also a position at which the abutting section 75 is separated from the transport path of the recording medium P transported to the loading surface 22. In addition, the abutting section 75 returns to the retraction position after the lower end P2 of the recording medium P is abutted against the supporting section 50.

Further, the abutting section 75 comes into contact with the upper end P1 of the recording medium P in a state of entering the notch 73 of the second correcting section 70. It should be noted that the upper end P1 is an end portion of the recording medium P opposite to the lower end P2.

### <Aligning Section 80>

The aligning section 80 shown in Figs. 1 and 7 is a constituent section that comes into contact with both side ends of the recording medium P in a state where the first correcting section 170 and the second correcting section 70 are positioned at the correction positions (refer to Fig. 6) and that aligns the side ends of the recording medium P. As shown in Fig. 7, the aligning section 80 has a first aligning portion 81 and a second aligning portion 82.

In the aligning section 80, the first aligning portion 81 comes into contact with a side end (hereinafter, referred to as a front end P3) of one side (front side in the present exemplary embodiment) of the recording medium P, and the second aligning portion 82 comes into contact with a side end (hereinafter, referred to as the rear end P4) of the other side (rear side in the present exemplary embodiment) of the recording medium P. Thereby, the side ends of the recording medium P (in other words, positions of the recording medium P in the front-rear direction) are aligned.

In the present exemplary embodiment, each of the first aligning portion 81 and the second aligning portion 82 moves from retraction positions (indicated by the two-dot chain lines in Fig. 7), at which the first aligning portion 81 and the second aligning portion 82 are not in contact with the recording medium P transported toward the loading surface 22, and comes into contact with each of the side ends (specifically, the front end P3 and the rear end P4) of the recording medium P. The retraction position is also a position at which each of the first aligning portion 81 and the second aligning portion 82 is separated from the transport path of the recording medium P transported to the loading surface 22. In addition, the aligning section 80 returns to the retraction position after aligning the side ends of the recording medium P. In the present exemplary embodiment, each time the transporting rollers 32A transport the recording medium P to the loading surface 22, the above-mentioned movement operation (that is, the first operation or the second operation) of the first correcting section 170, the above-mentioned movement operation (that is, the first operation or the second operation) of the second correcting section 70, the above-mentioned abutting operation performed by the abutting section 75, and the above-mentioned alignment performed by the aligning section 80 are executed. Thereby, the plurality of recording media P are loaded on the loading surface 22 in a state of being aligned in the up-down direction and the front-rear direction.

### <Post-Processing Section 90>

The post-processing section 90 shown in Fig. 1 is a constituent section that executes the post-processing on the recording medium P loaded on the loading surface 22. In the present exemplary embodiment, the post-processing section 90 executes, as the post-processing, processing of binding the plurality of recording media P and folding the plurality of recording media P.

As shown in Fig. 1, the post-processing section 90 includes a binding portion 91, a pair of folding rollers 92 and 93, a push-in portion 94, and transporting rollers 96. The binding portion 91 is a so-called stapler, and the plurality of recording media P are bound by striking, with a needle, a predetermined intermediate part of the plurality of recording media P loaded on the loading surface 22 in the up-down direction.

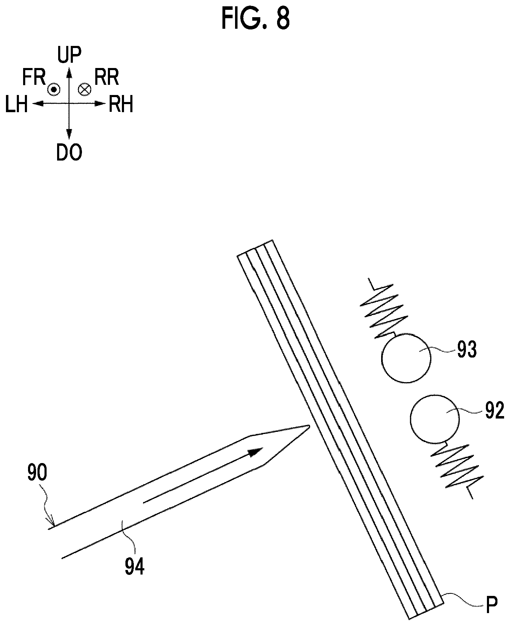

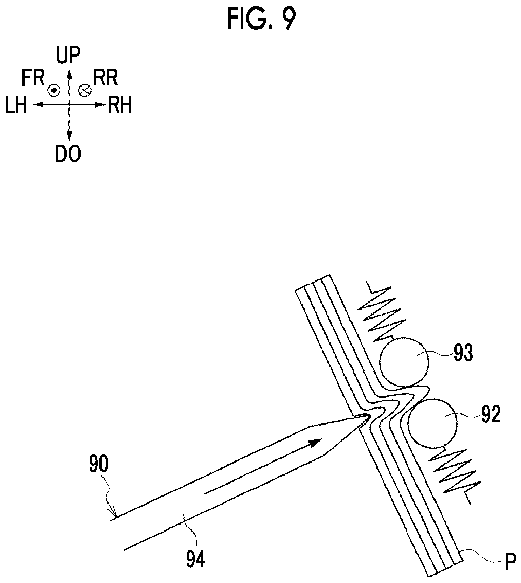

The pair of folding rollers 92 and 93 are disposed side by side along the obliquely upper left side on the obliquely upper right side with respect to the passage hole 44 of the guiding section 40. The folding roller 92 rotates in the clockwise direction in Figs. 8 and 9, and the folding roller 93 rotates in the counterclockwise direction in Figs. 8 and 9.

The push-in portion 94 is formed in a tapered shape of which a length is longer than the length of the recording medium P loaded on the loading surface 22 in the front-rear direction and of which the apical end portion is tapered.

As shown in Figs. 8 and 9, the push-in portion 94 moves toward the obliquely upper right side in a direction orthogonal to the loading surface 22, pushes the apical end portion thereof into the predetermined intermediate part, which is a fold part in the plurality of recording media P loaded on the loading surface 22, in the up-down direction, and pushes the intermediate part into a gap between the pair of folding rollers 92 and 93, thereby sandwiching the plurality of recording media P between the pair of folding rollers 92 and 93 and folding the plurality of recording media P. Here, in the present exemplary embodiment, the push-in portion 94 pushes the intermediate part of the recording medium P in the up-down direction in a state where the first correcting section 170 is in contact with the recording medium P loaded on the loading surface 22 (specifically, in a state where the first correcting section 170 is positioned at the correction position), thereby folding the recording medium P. In such a case, the first correcting section 170 comes into contact with the recording medium P loaded on the loading surface 22 under the push-in portion 94. In such a case, the second correcting section 70 is positioned at the retraction position and is not in contact with the recording medium P. That is, in a state where only the first correcting section 170 of the second correcting section 70 and the first correcting section 170 is in contact with the recording medium P, the push-in portion 94 folds the recording medium P.

By rotating the pair of folding rollers 92 and 93, the folded recording medium P is transported to the transporting rollers 96. Further, the transporting rollers 96 transport the plurality of recording media P folded by the pair of folding rollers 92 and 93 and the push-in portion 94, and ejects the recording medium P to the second ejection section 12.

The post-processing executed by the post-processing section 90 is not limited to the above-mentioned processing. As the post-processing, for example, only one of binding processing of binding the plurality of recording media P and folding processing of folding the plurality of recording media P may be performed. Further, the post-processing may be cutting processing of cutting the recording medium P, drilling processing of making a hole in the recording medium P, or the like, and may be processing executed on the recording medium P on which an image is formed.

### <Execution Procedure of Executing Post-Processing>

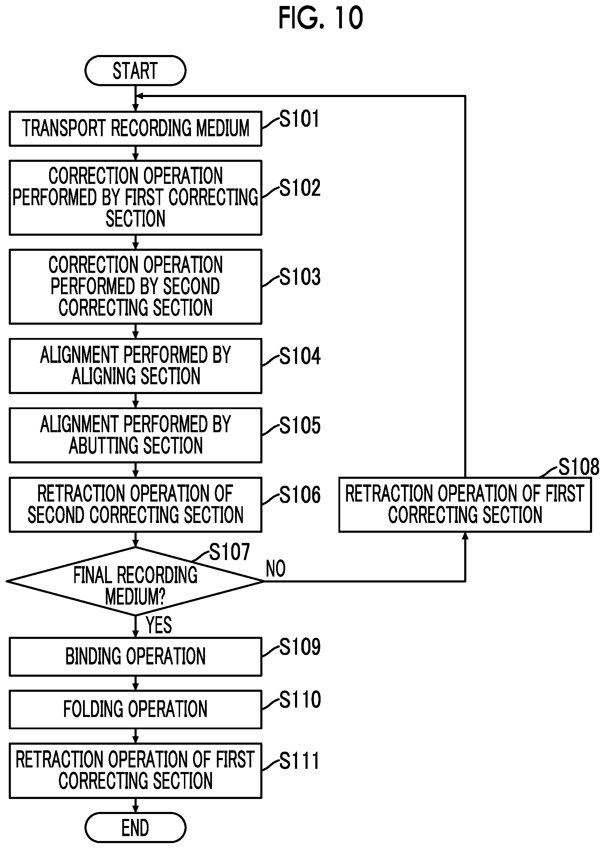

The execution procedure for executing the post-processing is executed, for example, as follows. That is, as shown in Fig. 10, first, the transporting mechanism 30 (specifically, the plurality of transporting rollers 32 including the transporting rollers 32A) transport the recording medium P downward toward the loading surface 22 (step S101).

Next, the first correcting section 170 executes a correction operation through the first operation or the second operation on the recording medium P loaded on the loading surface 22 (step S102). After executing the correction operation, the first correcting section 170 keeps a state of being positioned at the correction position.

Next, the second correcting section 70 executes a correction operation through the first operation or the second operation on the recording medium P loaded on the loading surface 22 (step S103). The second correcting section 70 executes the correction operation in a state where the first correcting section 170 is positioned at the correction position (refer to Figs. 5 and 6). After executing the correction operation, the second correcting section 70 is kept in a state of being positioned at the correction position.

Next, the aligning section 80 is a constituent section that comes into contact with both side ends of the recording medium P in a state where the first correcting section 170 and the second correcting section 70 are positioned at the correction positions (refer to Fig. 6) and that aligns the side ends of the recording medium P (step S104). It should be noted that the aligning section 80 returns to the retraction position after aligning the side ends of the recording medium P.

Next, the abutting section 75 pushes the upper end P1 of the recording medium P downward in a state where the first correcting section 170 and the second correcting section 70 are positioned at the correction positions (refer to Fig. 6), and abuts the lower end P2 against the supporting section 50. Thereby, the upper end P1 of the recording medium P (in other words, the position of the recording medium P in the up-down direction) is aligned (step S105). In addition, the abutting section 75 returns to the retraction position after the lower end P2 of the recording medium P is abutted against the supporting section 50.

Next, the second correcting section 70 executes a retraction operation of moving from the correction position (the position indicated by the solid line in Fig. 6) to the retraction position (the position shown in Fig. 2) (step S 106).

Then, it is determined whether or not the recording medium P loaded on the loading surface 22 is the final recording medium P among a group (that is, one unit) of recording media P for performing post-processing (step S107). In a case where it is determined that the recording medium P is not the final recording medium P (step S107: NO), the first correcting section 170 executes the retraction operation to move from the correction position (the position indicated by the solid line in Fig. 6) to the retraction position (the position shown in Fig. 2) (step S108), and returns to step S101. That is, in step S107, steps S101 to S106 are repeated until it is determined that the recording medium P is the final recording medium P. It should be noted that steps S101 to S106 are executed each time one recording medium P is transported to the loading surface 22.

Then, in step S107, in a case where it is determined that the recording medium P is the final recording medium P (step S107: YES), the binding portion 91 executes a binding operation of binding the plurality of recording media P by striking a needle in the predetermined intermediate part of the plurality of recording media P, which are loaded on the loading surface 22, in the up-down direction (step S109).

Next, a folding operation of folding the predetermined intermediate part of the plurality of recording media P in the up-down direction is executed by using the push-in portion 94 and the pair of folding rollers 92 and 93 (step S110). It should be noted that step S109 and step S 110 are executed in a state where the first correcting section 170 is positioned at the correction position.

Next, the first correcting section 170 executes the retraction operation of moving from the correction position (the position indicated by the solid line in Fig. 6) to the retraction position (the position shown in Fig. 2) (step S111), and ends execution of the current post-processing.

### <Action of Present Exemplary Embodiment>

In the present exemplary embodiment, the first correcting section 170 comes into contact with the recording medium P in a posture in which the lower end portion of the facing surface 172 approaches closer to the loading surface 22 than the upper end portion thereof from the side (right side in Fig. 3) of the recording medium P, which is loaded on the loading surface 22, opposite to the loading surface 22 (refer to Fig. 3). Thereafter, in a state where the lower end portion of the facing surface 172 is in contact with the recording medium P, the first correcting section 170 corrects the deflection P7 of the recording medium P by the upper end portion of the facing surface 172 coming into contact with the recording medium P while moving so as to approach the loading surface 22 (refer to Fig. 4).

Therefore, as compared with a case where the facing surface 172 consistently comes into contact with the recording medium P in a posture in which the facing surface 172 is along the loading surface 22 to correct the deflection P7 of the recording medium P, in a case where the deflection P7 of the recording medium P is corrected, the deflection part of the recording medium P can be extended upward. As a result, the deflection part of the recording medium P is suppressed from extending downward.

In the present exemplary embodiment, in other words, the first correcting section 170 comes into contact with a first part of the recording medium P from a side (the right side in Fig. 3) of the recording medium P, which is loaded on the loading surface 22, opposite to the loading surface 22 (refer to Fig. 3) and thereafter comes into contact with the second part above the first part of the recording medium P in a state of being in contact with the first part, thereby correcting the deflection P7 of the recording medium P (refer to Fig. 4).

Therefore, as compared with a case where the first correcting section 170 consistently comes into contact with the first part and the second part of the recording medium P at the same time to correct the deflection P7 of the recording medium P, in a case where the deflection P7 of the recording medium P is corrected, the deflection part of the recording medium P can be extended upward. As a result, the deflection part of the recording medium P is suppressed from extending downward.

In the present exemplary embodiment, in other words, the first correcting section 170 comes into contact with a part of the recording medium P from a side of the recording medium P, which is loaded on the loading surface 22, opposite to the loading surface 22 (refer to Fig. 3) and thereafter comes into contact with the recording medium P such that an area of the contact with the recording medium P increases upward from the part, thereby correcting deflection P7 of the recording medium P (refer to Fig. 4).

Therefore, as compared with a case where the first correcting section 170 corrects the deflection P7 of the recording medium P in a state where the area of the contact with respect to the recording medium P is consistently constant, in a case where the deflection P7 of the recording medium P is corrected, the deflection part of the recording medium P can be extended upward. As a result, the deflection part of the recording medium P is suppressed from extending downward.

Further, in the present exemplary embodiment, the push-in portion 94 pushes the intermediate part of the recording medium P in the up-down direction in a state where the first correcting section 170 is in contact with the recording medium P loaded on the loading surface 22, thereby folding the recording medium P.

Therefore, the recording medium P is folded in a state where the deflection P7 of the recording medium P is corrected. Thus, in a state where the first correcting section 170 is not in contact with the recording medium P, as compared with a case where the push-in portion 94 folds the recording medium P by pushing the intermediate part of the recording medium P in the up-down direction, the folding position is suppressed from being in disorder for each recording medium P.

Further, in a case where the push-in portion 94 folds the recording medium P, the first correcting section 170 comes into contact with the recording medium P loaded on the loading surface 22 under the push-in portion 94.

Therefore, the recording medium P is folded in a state where the deflection P7 in the lower side part of the push-in portion 94 in the recording medium P is corrected. Thus, as compared with the case where the first correcting section 170 comes into contact with the recording medium P loaded on the loading surface 22 on the upper side of the push-in portion 94, the folding position is suppressed from being in disorder for each recording medium P.

Further, in the present exemplary embodiment, the first correcting section 170 is able to selectively execute the above-mentioned first operation and the above-mentioned second operation. Here, in accordance with the type of the recording medium P, in the second operation, there may be a type of the recording medium P (for example, a thin sheet having a low rigidity) with which the deflection P7 is more easily eliminated. Therefore, as compared with a case where first correcting section 170 is able to execute only the first operation, in a case where first correcting section 170 corrects the deflection P7 of the recording medium P, the deflection part of the recording medium P is suppressed from extending downward.

Further, in the present exemplary embodiment, for example, the first correcting section 170 executes the above-mentioned first operation in a case where a first type recording medium P is loaded on the loading surface 22, and executes the above-mentioned second operation in a case where a second type recording medium P different from the first type recording medium P is loaded on the loading surface 22.

In accordance with the type recording medium P, in the first operation, there may be a type of the recording medium P (for example, a thick sheet or the like with high rigidity) with which the deflection P7 is more easily eliminated, or in the second operation, there may be a type of the recording medium P (for example, a medium having low rigidity such as a thin sheet) with which the deflection P7 is more easily eliminated. Therefore, as compared with a case where the first operation and the second operation are selected regardless of the type of the recording medium P, in a case where the deflection P7 of the recording medium P is corrected, the deflection part of the recording medium P is suppressed from extending downward.

Further, the first correcting section 170 executes the above-mentioned first operation in a case where a recording medium P, on which a first fixing device fixes an image, is loaded on the loading surface 22, and executes the above-mentioned second operation in a case where a recording medium P, on which a second fixing device different from the first fixing device fixes an image, is loaded on the loading surface 22.

In accordance with the direction in which the recording medium P is bent by the fixing operation of the fixing device, in the first operation, the deflection P7 may be more easily eliminated (specifically, the recording medium P may be bent such that the side opposite to the loading surface 22 is convex), or in the second operation, the deflection P7 may be more easily eliminated (specifically, the recording medium P may be bent such that the loading surface 22 side is convex). As compared with a case where the first operation and the second operation are selected regardless of the type of fixing device which fixes the image to the recording medium P, in a case where the deflection P7 of the recording medium P is corrected, the deflection part of the recording medium P is suppressed from extending downward.

Further, in the present exemplary embodiment, the second correcting section 70 comes into contact with the recording medium P in a posture in which the lower end portion of the facing surface 72 approaches closer to the loading surface 22 than the upper end portion thereof from the side (right side in Fig. 5) of the recording medium P, which is loaded on the loading surface 22, opposite to the loading surface 22 (refer to Fig. 5). Thereafter, in a state where the lower end portion of the facing surface 72 is in contact with the recording medium P, the second correcting section 70 corrects the deflection P7 of the recording medium P by the upper end portion of the facing surface 72 coming into contact with the recording medium P while moving so as to approach the loading surface 22 (refer to Fig. 6).

Therefore, as compared with a case where the facing surface 72 consistently comes into contact with the recording medium P in a posture in which the facing surface 72 is along the loading surface 22 to correct the deflection P7 of the recording medium P, in a case where the deflection P7 of the recording medium P is corrected, the deflection part of the recording medium P can be extended upward. As a result, the deflection part of the recording medium P is suppressed from extending downward.

In the present exemplary embodiment, in other words, the second correcting section 70 comes into contact with a first part of the recording medium P from a side of the recording medium P, which is loaded on the loading surface 22, opposite to the loading surface 22 (refer to Fig. 5) and thereafter comes into contact with the second part above the first part of the recording medium P in a state of being in contact with the first part, thereby correcting the deflection P7 of the recording medium P (refer to Fig. 6).

Therefore, as compared with a case where the second correcting section 70 consistently comes into contact with the first part and the second part of the recording medium P at the same time to correct the deflection P7 of the recording medium P, in a case where the deflection P7 of the recording medium P is corrected, the deflection part of the recording medium P can be extended upward. As a result, the deflection part of the recording medium P is suppressed from extending downward.

Further, in the present exemplary embodiment, in other words, the second correcting section 70 comes into contact with a part of the recording medium P from a side of the recording medium P, which is loaded on the loading surface 22, opposite to the loading surface 22 (refer to Fig. 5) and thereafter comes into contact with the recording medium P such that an area of the contact with the recording medium P increases upward from the part, thereby correcting deflection P7 of the recording medium P (refer to Fig. 6).

Therefore, as compared with a case where the second correcting section 70 corrects the deflection P7 of the recording medium P in a state where the area of the contact with respect to the recording medium P is consistently constant, in a case where the deflection P7 of the recording medium P is corrected, the deflection part of the recording medium P can be extended upward. As a result, the deflection part of the recording medium P is suppressed from extending downward.

Further, in the present exemplary embodiment, the second correcting section 70 is able to selectively execute the above-mentioned first operation and the above-mentioned second operation. Here, in accordance with the type of the recording medium P, in the second operation, there may be a type of the recording medium P (for example, a thin sheet having a low rigidity) with which the deflection P7 is more easily eliminated. Therefore, as compared with a case where the second correcting section 70 is able to execute only the first operation, in a case where the second correcting section 70 corrects the deflection P7 of the recording medium P, the deflection part of the recording medium P is suppressed from extending downward.

Further, in the present exemplary embodiment, for example, the second correcting section 70 executes the above-mentioned first operation in a case where a first type recording medium P is loaded on the loading surface 22, and executes the above-mentioned second operation in a case where a second type recording medium P different from the first type recording medium P is loaded on the loading surface 22.

In accordance with the type recording medium P, in the first operation, there may be a type of the recording medium P (for example, a thick sheet or the like with high rigidity) with which the deflection P7 is more easily eliminated, or in the second operation, there may be a type of the recording medium P (for example, a medium having low rigidity such as a thin sheet) with which the deflection P7 is more easily eliminated. Therefore, as compared with a case where the first operation and the second operation are selected regardless of the type of the recording medium P, in a case where the deflection P7 of the recording medium P is corrected, the deflection part of the recording medium P is suppressed from extending downward.

Further, the second correcting section 70 executes the above-mentioned first operation in a case where a recording medium P, on which a first fixing device fixes an image, is loaded on the loading surface 22, and executes the above-mentioned second operation in a case where a recording medium P, on which a second fixing device different from the first fixing device fixes an image, is loaded on the loading surface 22.

In accordance with the direction in which the recording medium P is bent by the fixing operation of the fixing device, in the first operation, the deflection P7 may be more easily eliminated (specifically, the recording medium P may be bent such that the side opposite to the loading surface 22 is convex), or in the second operation, the deflection P7 may be more easily eliminated (specifically, the recording medium P may be bent such that the loading surface 22 side is convex). As compared with a case where the first operation and the second operation are selected regardless of the type of fixing device which fixes the image to the recording medium P, in a case where the deflection P7 of the recording medium P is corrected, the deflection part of the recording medium P is suppressed from extending downward.

### <Modification Example>

In the present exemplary embodiment, as the moving mechanisms 160 and 60 which moves the first correcting section 170 and the second correcting section 70, a mechanism having two links and two driving portions is used. However, the present invention is not limited thereto. As an example of the moving mechanism, for example, a mechanism that transmits a driving force from one driving portion to two links by using a transmission member such as a gear may be used. Further, as an example of the moving mechanism, for example, a mechanism using other mechanical elements such as a pulley, a belt, and a cam may be used instead of the link. Further, as an example of the moving mechanism, for example, a mechanism using an actuator such as a solenoid or a cylinder may be used.

Further, in the present exemplary embodiment, each of the first correcting section 170 and the second correcting section 70 is able to execute the first operation and the second operation. However, the present invention is not limited thereto. For example, the first correcting section 170 and the second correcting section 70 may have a configuration capable of executing only the first operation. Further, one of the first correcting section 170 and the second correcting section 70 may be configured to be able to execute the first operation, and then the other may be configured to be able to execute only the second operation, that is, may be configured to be unable to execute the first operation. That is, in the present exemplary embodiment, at least one of the first correcting section 170 or the second correcting section 70 may be capable of executing the first operation.

Further, in the present exemplary embodiment, the push-in portion 94 pushes the intermediate part of the recording medium P in the up-down direction in a state where the first correcting section 170 is in contact with the recording medium P loaded on the loading surface 22, thereby folding the recording medium P. However, the present invention is not limited thereto. For example, in a state where the first correcting section 170 is not in contact with the recording medium P, the push-in portion 94 may be configured to push the intermediate part of the recording medium P in the up-down direction to fold the recording medium P.

Further, in the present exemplary embodiment, in a case where the push-in portion 94 folds the recording medium P, only the first correcting section 170 of the second correcting section 70 and the first correcting section 170 comes into contact with the recording medium P loaded on the loading surface 22. However, the present invention is not limited thereto. For example, the first correcting section 170 and the second correcting section 70 may be configured to come into contact with the recording medium P loaded on the loading surface 22, or only the second correcting section 70 of the first correcting section 170 and the second correcting section 70 may be configured to come into contact with the recording medium P loaded on the loading surface 22. Further, the push-in portion 94 may be configured to fold the recording medium P in a state where neither the first correcting section 170 nor the second correcting section 70 is in contact with the recording medium P.

Further, in the present exemplary embodiment, in a case where the push-in portion 94 folds the recording medium P, the first correcting section 170 comes into contact with the recording medium P loaded on the loading surface 22 under the push-in portion 94. However, it is not limited thereto. For example, the first correcting section 170 may be configured to come into contact with the recording medium P loaded on the loading surface 22 above the push-in portion 94.

The present invention is not limited to the above-mentioned exemplary embodiment, and various modifications, changes, and improvements can be made without departing from the scope of the present invention. For example, the above-mentioned modification examples may be configured to be combined with each other as appropriate.

### <Supplementary Notes>

(((1))) A post-processing device comprising:
   a loading section that has a loading surface directed obliquely upward and in which a recording medium is loaded on the loading surface in a state where one end of the recording medium is directed downward;
   a supporting section that supports the one end of the recording medium loaded on the loading surface; and
   a correcting section that has a facing surface facing toward the loading surface and that corrects deflection of the recording medium by coming into contact with the recording medium in a posture in which a lower end portion of the facing surface approaches closer to the loading surface than an upper end portion from a side of the recording medium, which is loaded on the loading surface, opposite to the loading surface and by thereafter coming into contact with the recording medium while moving such that the upper end portion approaches the loading surface in a state where the lower end portion is in contact with the recording medium.
(((2))) A post-processing device comprising:
   a loading section that has a loading surface directed obliquely upward and in which a recording medium is loaded on the loading surface in a state where one end of the recording medium is directed downward;
   a supporting section that supports the one end of the recording medium loaded on the loading surface; and
   a correcting section that corrects deflection of the recording medium by coming into contact with a first part of the recording medium from a side of the recording medium, which is loaded on the loading surface, opposite to the loading surface and by thereafter coming into contact with a second part above the first part of the recording medium in a state of being in contact with the first part.
(((3))) A post-processing device comprising:
   a loading section that has a loading surface directed obliquely upward and in which a recording medium is loaded on the loading surface in a state where one end of the recording medium is directed downward;
   a supporting section that supports the one end of the recording medium loaded on the loading surface; and
   a correcting section that corrects deflection of the recording medium by coming into contact with a part of the recording medium from a side of the recording medium, which is loaded on the loading surface, opposite to the loading surface and by thereafter coming into contact with the recording medium such that an area of the contact with the recording medium increases upward from the part.
(((4))) The post-processing device according to any one of (((1))) to (((3))), further comprising
   a folding section that folds the recording medium by pushing an intermediate part in an up-down direction of the recording medium in a state where the correcting section is in contact with the recording medium loaded on the loading surface.
(((5))) The post-processing device according to (((4))),
   wherein the correcting section comes into contact with the recording medium, which is loaded on the loading surface, under the folding section.
(((6))) The post-processing device according to any one of (((1))) to (((5))),
   wherein the correcting section is able to selectively execute
   a first operation of correcting deflection of the recording medium by coming into contact with the recording medium in a posture in which the lower end portion of the facing surface approaches closer to the loading surface than the upper end portion from the side of the recording medium, which is loaded on the loading surface, opposite to the loading surface and by thereafter coming into contact with the recording medium while moving such that the upper end portion approaches the loading surface in a state where the lower end portion is in contact with the recording medium, and
   a second operation of correcting deflection of the recording medium by coming into contact with the recording medium while being displaced upward in a posture, in which the facing surface is along the loading surface, from the side of the recording medium, which is loaded on the loading surface, opposite to the loading surface.
(((7))) The post-processing device according to (((6))),
   wherein the correcting section
   executes the first operation in a case where a first type recording medium is loaded on the loading surface, and
   executes the second operation in a case where a second type recording medium different from the first type recording medium is loaded on the loading surface.
(((8))) The post-processing device according to (((6))) or (((7))),
   wherein the correcting section
   executes the first operation in a case where a recording medium, on which a first fixing device fixes an image, is loaded on the loading surface, and
   executes the second operation in a case where a recording medium, on which a second fixing device different from the first fixing device fixes an image, is loaded on the loading surface.
(((9))) An image forming apparatus comprising:
   an image forming section that forms an image on a recording medium; and
   the post-processing device according to any one of (((1))) to (((8))) that executes post-processing on the recording medium on which the image forming section forms the image.

In the configuration according to (((1))), as compared with a case where the facing surface consistently comes into contact with the recording medium in the posture in which the facing surface is along the loading surface to correct the deflection of the recording medium, the deflection part of the recording medium is suppressed from extending downward in a case where the deflection of the recording medium is corrected.

In the configuration according to (((2))), as compared with a case where the correcting section consistently comes into contact with the first part and the second part of the recording medium at the same time to correct the deflection of the recording medium, the deflection part of the recording medium is suppressed from extending downward in a case where the deflection of the recording medium is corrected.

In the configuration according to (((3))), as compared with a case where the correcting section consistently corrects the deflection of the recording medium while keeping the area of the contact with the recording medium constant, the deflection part of the recording medium is suppressed from extending downward in a case where the deflection of the recording medium is corrected.

In the configuration according to (((4))), as compared with a case where the folding section pushes an intermediate part in the up-down direction of the recording medium to fold the recording medium in a state where the correcting section is not in contact with the recording medium, the folding position is suppressed from being in disorder for each recording medium.

In the configuration according to (((5))), as compared with a case where the correcting section comes into contact with the recording medium loaded on the loading surface above the folding section, the folding position is suppressed from being in disorder for each recording medium.

In the configuration according to (((6))), as compared with a case where the correcting section is able to execute only the first operation, the deflection part of the recording medium is suppressed from extending downward in a case where the deflection of the recording medium is corrected.

In the configuration according to (((7))), as compared with the case where the first operation and the second operation are selected regardless of the type of the recording medium, the deflection part of the recording medium is suppressed from extending downward in a case where the deflection of the recording medium is corrected.

In the configuration according to (((8))), as compared with the case where the first operation and the second operation are selected regardless of the type of the fixing device which fixes the image to the recording medium, the deflection part of the recording medium is suppressed from extending downward in a case where the deflection of the recording medium is corrected.

In the configuration according to (((9))), as compared with the case where the facing surface consistently comes into contact with the recording medium in a posture in which the facing surface is along the loading surface to correct the deflection of the recording medium, the deflection part of the recording medium is suppressed from extending downward in a case where the deflection of the recording medium on which the image is formed is corrected.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: post-processing device
20: loading section
22: loading surface
30: transporting mechanism
32A: transporting rollers (example of transporting section)
50: supporting section
60: second moving mechanism
61: first link
62: second link
63: first driving portion
64: second driving portion
69: supporting section
70: second correcting section (example of correcting section)
72: facing surface
75: abutting section
90: post-processing section
94: push-in portion
100: image forming apparatus
102: image forming section
160: first moving mechanism
161: first link
162: second link
163: first driving portion
164: second driving portion
169: supporting section
170: first correcting section (example of correcting section)
172: facing surface
P: recording medium

## Claims

1. A post-processing device comprising:
a loading section that has a loading surface directed obliquely upward and in which a recording medium is loaded on the loading surface in a state where one end of the recording medium is directed downward;
a supporting section that supports the one end of the recording medium loaded on the loading surface; and
a correcting section that has a facing surface facing toward the loading surface and that corrects deflection of the recording medium by coming into contact with the recording medium in a posture in which a lower end portion of the facing surface approaches closer to the loading surface than an upper end portion from a side of the recording medium, which is loaded on the loading surface, opposite to the loading surface and by thereafter coming into contact with the recording medium while moving such that the upper end portion approaches the loading surface in a state where the lower end portion is in contact with the recording medium.

2. A post-processing device comprising:
a loading section that has a loading surface directed obliquely upward and in which a recording medium is loaded on the loading surface in a state where one end of the recording medium is directed downward;
a supporting section that supports the one end of the recording medium loaded on the loading surface; and
a correcting section that corrects deflection of the recording medium by coming into contact with a first part of the recording medium from a side of the recording medium, which is loaded on the loading surface, opposite to the loading surface and by thereafter coming into contact with a second part above the first part of the recording medium in a state of being in contact with the first part.

3. A post-processing device comprising:
a loading section that has a loading surface directed obliquely upward and in which a recording medium is loaded on the loading surface in a state where one end of the recording medium is directed downward;
a supporting section that supports the one end of the recording medium loaded on the loading surface; and
a correcting section that corrects deflection of the recording medium by coming into contact with a part of the recording medium from a side of the recording medium, which is loaded on the loading surface, opposite to the loading surface and by thereafter coming into contact with the recording medium such that an area of the contact with the recording medium increases upward from the part.

4. The post-processing device according to any one of claims 1 to 3, further comprising
a folding section that folds the recording medium by pushing an intermediate part in an up-down direction of the recording medium in a state where the correcting section is in contact with the recording medium loaded on the loading surface.

5. The post-processing device according to claim 4,
wherein the correcting section comes into contact with the recording medium, which is loaded on the loading surface, under the folding section.

6. The post-processing device according to any one of claims 1 to 5,
wherein the correcting section is able to selectively execute
a first operation of correcting deflection of the recording medium by coming into contact with the recording medium in a posture in which the lower end portion of the facing surface approaches closer to the loading surface than the upper end portion from the side of the recording medium, which is loaded on the loading surface, opposite to the loading surface and by thereafter coming into contact with the recording medium while moving such that the upper end portion approaches the loading surface in a state where the lower end portion is in contact with the recording medium, and
a second operation of correcting deflection of the recording medium by coming into contact with the recording medium while being displaced upward in a posture, in which the facing surface is along the loading surface, from the side of the recording medium, which is loaded on the loading surface, opposite to the loading surface.

7. The post-processing device according to claim 6,
wherein the correcting section
executes the first operation in a case where a first type recording medium is loaded on the loading surface, and
executes the second operation in a case where a second type recording medium different from the first type recording medium is loaded on the loading surface.

8. The post-processing device according to claim 6 or 7,
wherein the correcting section
executes the first operation in a case where a recording medium, on which a first fixing device fixes an image, is loaded on the loading surface, and
executes the second operation in a case where a recording medium, on which a second fixing device different from the first fixing device fixes an image, is loaded on the loading surface.

9. An image forming apparatus comprising:
an image forming section that forms an image on a recording medium; and
the post-processing device according to any one of claims 1 to 8 that executes post-processing on the recording medium on which the image forming section forms the image.
